# EUROPEAN PATENT SPECIFICATION

(11) **EP 0 375 048 B1**
(45) Date of publication and mention of the grant of the patent: **02.03.1994**
(21) Application number: 89203212.9
(22) Date of filing: 15.12.1989
(51) Int. Cl.: C10K 1/20, C10K 1/30, C10K 1/02, B01D 47/00, B01D 47/06, B01D 47/10

(54) **Method and device for desulphurising gas**
Verfahren und Vorrichtung zum Entschwefeln von Gas
Méthode et dispositif pour désulfurer du gaz

(30) Priority: 23.12.1988 NL 8803164
(43) Date of publication of application: 27.06.1990
(73) Proprietor: N.V. Kema, 6812 AR Arnhem (NL)
(72) Inventor: Bos, Hugo Theodorus Pieter, NL-7203 AK Zutphen (NL); Raas, Johannes Laurentius, NL-7006 JE Doetinchem (NL)
(74) Representative: Prins, Hendrik Willem

(56) References cited:
- EP-A- 0 046 693
- DE-A- 1 567 790
- DE-A- 3 244 075
- GB-A- 719 056
- GB-A- 901 609
- GB-A- 1 064 507
- NL-A- 8 101 446
- US-A- 3 427 253
- US-A- 3 755 990
- US-A- 4 123 502
- ERDÖL UND KOHLE - ERDGAS - PETROCHEMIE VEREINIGT MIT BRENNSTOFF-CHEMIE, vol. 28, no. 2, February 1975, pages 81-87; H.-W. VON GRATKOWSKI: "Stand und technische Möglichkeiten der Kohlevergasung"

## Description

The present invention relates to a method and device for desulphurising gas, which gas is also purified of dust and impurities absorbable in water.

The gas for processing is originated mainly from a method wherein fuel such as coal, oil, shale oil, tar sand and soot-forming natural gas, are gasified with oxygen at a temperature of approximately 800-1500°C. The gas formed contains hydrogen sulphide, carbonyl sulphide and in addition dust particles and impurities absorbable in water. These impurities comprise hydrogen chloride, hydrogen fluoride, alkaline metal salts such as sodium chloride and potassium chloride, ammonia, hydrogen cyanide and heavy metals.

The dust and impurities are on the one hand harmful to the environment and on the other hand erosive and corrosive, for example for a gas turbine wherein the gas is burned and which is used for generating electricity.

The method therefore applies mainly to gas deriving from a gasifying installation which is integrated with a steam and gas turbine for the production of electricity (hereafter referred to as KV-STEG).

In the state of the art a method is known for low temperature desulphurising of coal gas (temperature -30 to 90°C). After cooling, coal gas is hereby purified of dust and impurities by means of a water washing and further cooled, after which sulphur compounds are removed by means of absorption in a liquid. The desulphurised coal gas is thereafter fed to a gas turbine after an optional after-treatment such as further heating and moistening.

H.W. von Gratkowski in "Stand und technische Möglichkeiten der Kohlenvergasung" in "Erdöl und Kohle", vol. 28, no. 2, 1975, for instance describes the so-called KT gasifying method wherein the water washing is performed at atmospheric pressure. Desulphurisation subsequently takes place with an adsorbent at a relatively low temperature since the gas temperature is lowered after the water washing by making use of a gas cooler.

Also known in the state of the art is a method for desulphurising coal gas at high temperatures (temperature 400-1000°C). The coal gas to be desulphurised is herein purified of dust in a dust removal system after cooling in a heat exchanger, following which hydrogen chloride and hydrogen fluoride are removed according to a system further unknown, alkaline metal salts are adsorbed on clay and finally sulphur is adsorbed on for example ferric oxide at a temperature of for instance 650°C. Finally, ammonia can be removed by, for example, a reducing pre-combustion and a subsequent oxidising post-combustion for the conversion of ammonia into nitrogen and water vapour.

US-A-4.123.502 for example describes a method for purifying gas at high pressure (20 bar) wherein use is made for the gas washing of wash oil, in particular tar oil. This gas washing takes place at a temperature of 250-360°C but the sulphur adsorption takes place at a temperature below 300°C because after desulphurisation using a heat exchanger the gas is heated to a temperature above 300°C. As a result of omitting a water washing no shift reaction will take place and no water-soluble compounds are removed. Only dust and hydrogen sulphide are removed, while for the other impurities undescribed additional treatment steps are required which make the method complicated.

The invention has for its object to provide a method for desulphurising gas which displays a better energy output relative to the known low-temperature desulphurising and provides a desulphurisation device that is cheaper and simpler to operate relative to high-temperature desulphurisation and which, relative to both desulphurising processes, makes advantageous use of the so-called shift reaction that occurs.

This is achieved according to the invention in that the method for desulphurising gas containing sulphur compounds, dust and/or impurities absorbable in water comprises the steps of:
a) washing of the gas with water at a temperature of 100-200°C and at a pressure of 15-85 bar; and
b) guiding of the water-washed gas for the purpose of desulphurising over an adsorption material at a temperature of 300-650°C and at a pressure of 15-85 bar, while the exothermic shift reaction takes place whereby the gas is heated and its water concentration lowered.

Relative to the low-temperature desulphurisation, the gas for desulphurising needs much less cooling and the desulphurised gas does not requires any further after-treatment (such as moistening) for a KV-STEG. For a KV-STEG it has been found that the output improvement amounts to 1% point. While it is true that relative to high-temperature desulphurisation the output is lower (about 1-2% point), the laborious removal of dust, hydrogen chloride, hydrogen fluoride and alkalis can be dispensed with. Because the desulphurisation device is relatively simple in construction investment costs will be considerably lower and fully compensate for the decrease in output.

It is noted that through the water washing the gas for desulphurising contains a high content of water vapour so that in the case of many adsorbents the exothermic shift reaction takes place during the adsorption on the adsorption material whereby the gas need not be heated beforehand and as a result of the water concentration thereby becoming lower the adsorption of hydrogen sulphide is furthered.

The dust separation preferably takes place in two steps by the washing with water being split up into a first washing for washing out dust particles with a particle size larger than approximately 5 micrometres; and a second washing for washing out dust particles with a particle size smaller than approximately 5 micrometres. Erosion in the venturi scrubber is avoided if in preference the larger dust particles are first removed in a co-current spray column and the second washing is further performed with a venturi scrubber.

In the washing with water about 50% of the ammonia present is removed. More ammonia can be removed if more preferably the gas washed with water is subjected to ammonia removal.

Characteristic relative to processes according to the state of the art, the ammoniac removal takes place at an increased temperature, namely 125-185°C.

As indicated previously, with many adsorbents the gas can be fed directly to the adsorption unit without an interim temperature increase because the required heat is generated as a consequence of the relatively high water content (15-30% by volume) and the exothermic shift reaction.

In per se known manner adsorption material may comprise ferric oxide (Fe₂O₃, Fe₃O₄), zinc oxide, manganic oxide, Zinc-iron ferrites or other metal oxides and metal salts thereof.

An optimal adsorption control and thermal management occurs if in preference the desulphurising takes place in a fluid bed, a flowing bed and a fixed bed being further also usable.

Another object of the invention is to provide a device wherein the method according to the invention can be performed. This device comprises
i) a water washing unit (2,7) for washing the gas with water, comprising a water line (3), a loaded water outlet (6), a gas feedline (1) and a gas outline (5,10);
ii) an adsorption unit (16,17) for desulphurising the water-washed gas, connected to the gas outline (5,10) and comprising an adsorption material over which the exothermic shift reaction takes place and a purified gas outlet (21); and
iii) a turbine directly connected with the gas outlet (21).

The regeneration of the sulphur-loaded adsorption material is preferably carried out with oxygen. The substantially gaseous sulphur formed is discharged to a sulphur processing unit.
The invention will be further elucidated hereinafter with reference to a device which is shown in the annexed drawings, wherein:
fig. 1 shows a water washing unit with an ammonia absorber; and
fig. 2 shows the adsorption unit with a regeneration unit for the adsorption material.

The method for desulphurising gas comprises a water washing and a subsequent high-temperature desulphurising using an adsorption material. The method is performed substantially at a pressure of 15-80 bar, and preferably at 25-40 bar. The gas that is supplied to the water washing generally has a temperature of 250-450°C, preferably 250-400°C, and more preferably 300-400°C. As a result of the water washing the temperature generally decreases to 100-200°C, in particular to 125-185°C. During adsorption the temperature of the gas increases as a result of the occurring shift reaction, in general the prevailing temperature is 300-650°C, more particularly 350-500°C, and preferably about 400°C.

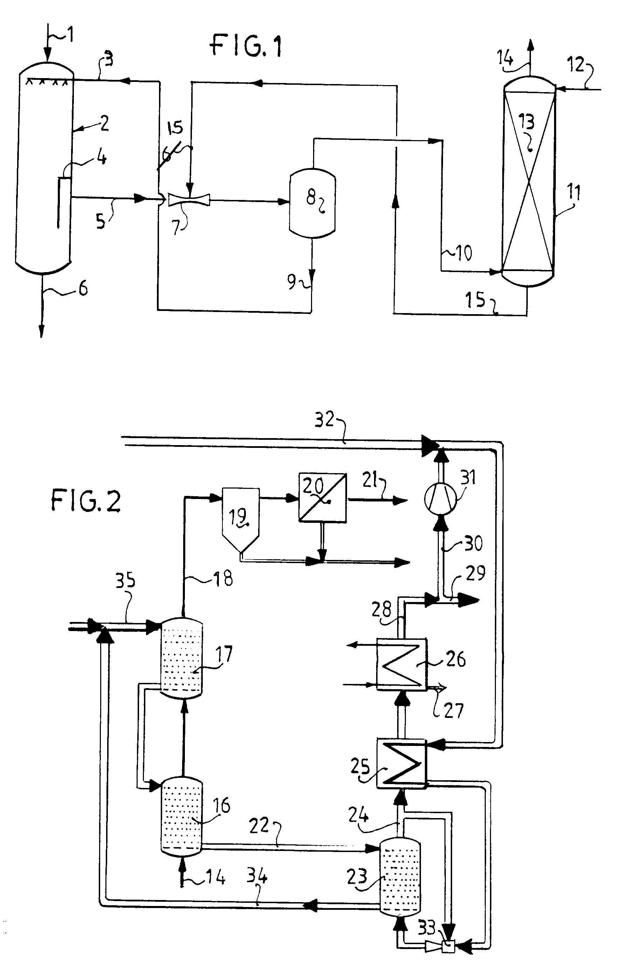

In fig. 1 crude coal gas (temperature 400°C, pressure 38 bar, 10g dust/Nm³) with the composition given in the table is fed via the line 1 to the top of a co-current spray column 2 to which water is supplied via the line 3. Gas purified of dust leaves the spray column 2 via an underflow 4. Water with dust particles (minimum particle size approximately 5 micrometres) leaves the spray column via an outlet 6. The gas 5 is fed to a venturi scrubber 7 together with water from the line 15 in order to remove smaller dust particles. The venturi scrubber 7 debouches into a tank 8 wherein water and gas are separated from one another. Water with particles (average particle size smaller than 5 micrometres) leaves the tank 8 via outlet 9. This water is fed back to the spray column 2. The water from the outlet 6 is discharged to a waste water treatment.

The gas leaving the tank 8 via the line 10 can be further purified of ammonia. The gas is fed to an ammonia absorber 11 whereby it is guided in counter-current to water supplied via the line 12 over a packed bed 13. The gas which leaves the ammonia absorber via the outlet 14 has the composition given in the table and is purified of dust, hydrogen chloride, hydrogen fluoride and ammonia but still contains only a small amount of hydrogen cyanide.

Water leaving the ammonia absorber 11 via the outlet 15 is fed back to the venturi scrubber 7 which is connected for this purpose to the line 6. In this embodiment no extra water is needed for the column.

As shown in fig. 2, the gas purified of dust and impurities is fed via the line 14 to one of two desulphurising units 16 and 17 placed in series which each have a fluid bed of adsorption material. The adsorption material to be used for the adsorption of hydrogen sulphide and carbonyl sulphide is known in the state of the art and comprises ferric oxide (mainly Fe₂O₃), manganic oxide, zinc-iron ferrites, and optionally mixtures thereof. The gas which leaves the desulphurising unit 17 via outlet 18 is rid of dust remnants in a cyclone 19 and discharged via the line 21 after passing through an after-cleaning unit 20. The cleaned coal gas can be burned in a gas turbine or can be used as synthesis gas during the preparation of all manner of chemical compounds.

The sulphur-loaded adsorption material is discharged via the line 22 from the desulphurising unit to a regeneration unit 23 wherein the formed ferric sulphide is converted with oxygen into sulphur and traces of sulphur dioxide. This gaseous material exits from the regeneration unit 23 via the line 24, is cooled in the heat exchanger and further cooled with generation of low-pressure steam in the heat exchanger 26 wherein a separation also takes place between gas not for condensing and formed sulphur which is discharged via the line 27 to a sulphur processing unit. Gas not for condensing is discharged into the atmosphere via the line 28, partly via the line 29 and for another part via the line 30 after being pressurised in a recirculation compressor 31, mixed with oxygen which is supplied via the line 32. This mixture of gases is heated in the heat exchanger 25 and fed via the injector 33 to the regeneration unit 23. The function of the injector 33 is to guide a large quantity of gas for fluidisation through the fluid bed.

The regenerated adsorption material is returned via the line 34 to the inlet 35 for catalyst whereby nitrogen is used as carrier gas.

**TABLE**

| Coal gas composition | | | |
|---|---|---|---|
| Composition | Crude | After water/ammonia cleaning | After desulphurising |
| argon (vol%) | 0.9 | 0.9 | 0.9 |
| H₂ | 28.3 | 26.8 | 45.4 |
| N₂ | 0.8 | 0.7 | 0.7 |
| H₂O | 18.3 | 24.0 | 5,6 |
| H₂S | 0.2 | 0.2 | --- |
| NH₃ | 0.08 | --- | --- |
| CO | 38.9 | 35.2 | 16.5 |
| CO₂ | 12.4 | 12.2 | 30.9 |
| COS | 0.01 | 0.01 | --- |
| CH₄ | 0.03 | 0.02 | 0.02 |
| HCl (ppm) | 60-400 | --- | --- |
| HF (ppm) | 40-100 | --- | --- |
| HCN (ppm) | 50 | 50 | 50 |
| alkali salts (mg/Nm³) | 10 | --- | --- |
| dust (g/Nm³) | 10 | <1 | <1 |
| P (bar) | 38 | 35.5 | 34.5 |
| T (°C) | 400°C | 183°C | 383°C |
| φₘ (kg/s) | 85.8 | 85.8 | 85.7 |

## Claims

1. Method for desulphurising gas which contains sulphur compounds, dust and/or impurities absorbable in water, comprising steps for:
a) washing the gas with water at a temperature of 100-200°C and at a pressure of 15-85 bar; and
b) guiding of the gas washed with water for the purpose of desulphurisation at a temperature of 300-650°C and at a pressure of 15-85 bar over an adsorption material, while the exothermic shift reaction takes place whereby the gas is heated and its water concentration lowered.

2. Method as claimed in claim 1, wherein the washing with water is split up into a first washing for washing out dust particles with a particle size greater than approximately 5 micrometres; and a second washing for washing out dust particles with a particle size smaller than approximately 5 micrometres.

3. Method as claimed in claim 2, wherein the first washing is carried out with a co-current spray column.

4. Method as claimed in claim 2 or 3, wherein the second washing is carried out with a venturi scrubber.

5. Method as claimed in claims 1-4, wherein the gas washed with water is subjected to an ammonia removal.

6. Method as claimed in claims 1-5, wherein the ammonia removal takes place with water that is also used for the gas washing.

7. Method as claimed in claim 5 or 6, wherein the ammonia removal takes place at a temperature of 125-185°C.

8. Method as claimed in claims 1-7, wherein the gas washed with water and optionally purified of ammonia is guided directly thereafter over the adsorption material.

9. Method as claimed in claims 1-8, wherein the adsorption material comprises ferric oxides, zinc oxides, manganic oxides, zinc-iron ferrites or other metal oxides or metal salts thereof.

10. Method as claimed in claims 1-9, wherein a fluid bed is used for the desulphurisation.

11. Method as claimed in claims 1-10, wherein the gas for guiding over the adsorption material has a water content of 15-30% by volume.

12. Method as claimed in claims 1-11, wherein the desulphurised gas has a water content of 3-10% by volume.

13. Device for carrying out the method according to claim 1 for desulphurising gas which contains sulphur compounds, dust and/or impurities absorbable in water, comprising:
i) a water washing unit (2,7) for washing the gas with water, comprising a water line (3), a loaded water outlet (6), a gas feedline (1) and a gas outline (5,10);
ii) an adsorption unit (16,17) for desulphurising the water-washed gas, connected to the gas outline (5,10) and comprising an adsorption material over which the exothermic shift reaction takes place and a purified gas outlet (21); and
iii) a turbine directly connected with the gas outlet (21).

14. Device as claimed in claim 13, wherein the washing unit comprises a first washing step for washing out dust particles with a particle size greater than approximately 5 micrometres and a second washing step for washing out dust particles with a particle size smaller than 5 micrometres.

15. Device as claimed in claims 13-14, wherein the first washing step is a co-current spray column.

16. Device as claimed in claims 13-15, wherein the second washing step is a venturi scrubber.

17. Device as claimed in claims 13-16, wherein an ammonia absorber connects to the washing unit.

18. Device as claimed in claims 13-17, wherein the adsorption unit comprises a fluid bed.

## Patentansprüche

1. Verfahren zum Entschwefeln von Gas, das Schwefelbestandteile, Staub und/oder in Wasser absorbierbare Verunreinigungen enthält, mit den Schritten:
a) Waschen des Gases mit Wasser bei einer Temperatur von 100 - 200°C und bei einem Druck von 15 - 85 Bar;
b) Leiten des mit Wasser gewaschenen Gases über ein Adsorptionsmaterial bei einer Temperatur von 300 - 650°C und bei einem Druck von 15 - 85 Bar zum Zweck der Entschwefelung, während wobei dann die exotherme Verschiebungsreaktion stattfindet, wodurch das Gas erhitzt und seine Wasseranreicherung vermindert wird.

2. Verfahren nach Anspruch 1,
bei dem der Waschvorgang mit Wasser aufgeteilt wird in einen ersten Waschvorgang zum Auswaschen von Staubpartikeln mit einer Partikelgröße größer als etwa 5 µm; und einen zweiten Waschvorgang zum Auswaschen von Staubpartikeln mit einer Partikelgröße kleiner als etwa 5 µm.

3. Verfahren nach Anspruch 2,
bei dem der erste Waschvorgang mit einem Parallelstromrieselturm ausgeführt wird.

4. Verfahren nach Anspruch 2 oder 3,
bei dem der zweite Waschvorgang mit einem Venturi-Wäscher ausgeführt wird.

5. Verfahren nach einem der Ansprüche 1 bis 4,
bei dem das mit Wasser gewaschene Gas einer Ammoniakentfernung unterworfen wird.

6. Verfahren nach einem der Ansprüche 1 bis 5,
bei dem die Ammoniakentfernung mit Wasser stattfindet, das auch für das Gaswaschen verwendet wird.

7. Verfahren nach Anspruch 5 oder 6,
bei dem die Ammoniakentfernung bei einer Temperatur von 125 - 185°C stattfindet.

8. Verfahren nach einem der Ansprüche 1 bis 7,
bei dem das mit Wasser gewaschene und optional von Ammoniak gereinigte Gas direkt danach über das Adsorptionsmaterial geleitet wird.

9. Verfahren nach einem der Ansprüche 1 bis 8,
bei dem das Adsorptionsmaterial Eisenoxide, Zinkoxide, Manganoxide, Zink-Eisen-Ferrite oder andere Metalloxide oder Metallsalze der vorgenannten Stoffe enthält.

10. Verfahren nach einem der Ansprüche 1 bis 9,
bei dem ein Fluidbett zur Entschwefelung verwendet wird.

11. Verfahren nach einem der Ansprüche 1 bis 10,
bei dem das zum Leiten über das Adsorptionsmaterial vorgesehene Gas einen Wassergehalt von 15 - 30 Vol% hat.

12. Verfahren nach einem der Ansprüche 1 bis 11,
bei dem das entschwefelte Gas einen Wassergehalt von 3 - 10 Vol% hat.

13. Vorrichtung zum Durchführen des Verfahrens nach Anspruch 1, zum Entschwefeln von Gas, das Schwefelbestandteile, Staub und/oder in Wasser absorbierbare Verunreinigungen enthält, die aufweist:
i) eine Wasserwascheinrichtung (2, 7) zum Waschen des Gases mit Wasser, die eine Wasserleitung (3), einen belasteten Wasserauslaß (6), eine Gasspeiseleitung (1) und eine Gasabführungsleitung (5, 10) aufweist;
ii) eine Adsorptionseinrichtung (16, 17), zum Entschwefeln des mit Wasser gewaschenen Gases, die mit der Gasabführungsleitung (5, 10) verbunden ist und die ein Adsorptionsmaterial, über dem die exotherme Verschiebungsreaktion stattfindet, sowie einen Auslaß (21) für gereinigtes Gas aufweist;
iii) eine direkt mit dem Gasauslaß (21) verbundene Turbine.

14. Vorrichtung nach Anspruch 13,
bei der die Wascheinrichtung eine erste Waschstufe zum Auswaschen von Staubpartikeln mit einer Partikelgröße größer als etwa 5 µm und eine zweite Waschstufe zum Auswaschen von Staubpartikeln mit einer Partikelgröße kleiner als 5 µm aufweist.

15. Vorrichtung nach Anspruch 13 oder 14,
bei der die erste Waschstufe ein Parallelstromrieselturm ist.

16. Vorrichtung nach einem der Ansprüche 13 bis 15,
bei der die zweite Waschstufe ein Venturi-Wäscher ist.

17. Vorrichtung nach einem der Ansprüche 13 bis 16,
bei der ein Ammoniak-Absorber mit der Wascheinrichtung verbunden ist.

18. Vorrichtung nach einem der Ansprüche 13 bis 17,
bei der die Adsorptionseinrichtung ein Fluidbett aufweist.

## Revendications

1. Procédé pour désulfurer un gaz contenant des composés du soufre, des poussières et/ou des impuretés pouvant être absorbées par l'eau, qui comprend les étapes consistant :
a) à laver le gaz avec de l'eau à une température de 100 à 200 °C et sous une pression de 15 à 85 bar ; et
b) à envoyer le gaz, lavé à l'eau pour permettre la désulfuration, sur un matériau adsorbant à une température de 300 à 650 °C et sous une pression de 15 à 85 bar, la réaction de déplacement étant exothermique, le gaz étant donc chauffé et sa teneur en eau diminuée.

2. Procédé selon la revendication 1, dans lequel le lavage à l'eau est subdivisé en un premier lavage pour éliminer par lavage les particules de poussière ayant une granulométrie supérieure à environ 5 µm ; et un deuxième lavage pour éliminer par lavage les particules de poussière ayant une granulométrie inférieure à environ 5 µm.

3. Procédé selon la revendication 2, dans lequel le premier lavage est réalisé avec une colonne à pulvérisation à co-courant.

4. Procédé selon la revendication 2 ou 3, dans lequel le deuxième lavage est effectué avec un laveur à Venturi.

5. Procédé selon les revendications 1 à 4, dans lequel le gaz lavé à l'eau est soumis à une élimination de l'ammoniac.

6. Procédé selon les revendications 1 à 5, dans lequel l'élimination de l'ammoniac est réalisée avec l'eau qui est également utilisée pour le lavage du gaz.

7. Procédé selon la revendication 5 ou 6, dans lequel l'élimination de l'ammoniac a lieu à une température de 125 à 185 °C.

8. Procédé selon les revendications 1 à 7, dans lequel le gaz lavé à l'eau et éventuellement débarrassé de l'ammoniac est envoyé immédiatement après sur le matériau adsorbant.

9. Procédé selon les revendications 1 à 8, dans lequel le matériel adsorbant comprend des oxydes ferriques, des oxydes de zinc, des oxydes manganiques, des ferrites de zinc-fer ou d'autres oxydes métalliques ou leurs sels métalliques.

10. Procédé selon les revendications 1 à 9, dans lequel on utilise un lit fluidisé pour la désulfuration.

11. Procédé selon les revendications 1 à 10, dans lequel le gaz destiné à passer sur le matériau adbsorbant a une teneur en eau de 15 à 30 % en volume.

12. Procédé selon les revendications 1 à 11, dans lequel le gaz désulfuré a une teneur en eau de 3 à 10 % en volume.

13. Dispositif pour mettre en oeuvre le procédé selon la revendication 1 pour désulfurer un gaz contenant des composés du soufre, des poussières et/ou des impuretés pouvant être absorbées par l'eau, qui comprend :
i) une unité de lavage à l'eau (2,7) destinée à laver le gaz à l'eau, qui comprend une conduite d'eau (3), un orifice pour l'eau chargée, une conduite d'amenée de gaz (1) et une conduite d'évacuation de gaz (5, 10) ;
ii) une unité d'adsorption (16, 17) pour désulfurer le gaz lavé à l'eau, raccordée à la conduite d'évacuation du gaz (5, 10) et comprenant un matériau adsorbant sur lequel a lieu la réaction de déplacement exothermique, ainsi qu'à un orifice de sortie de gaz purifié (21) ; et
iii) une turbine directement raccordée à l'orifice de sortie du gaz (21).

14. Dispositif selon la revendication 13, dans lequel l'unité de lavage comprend une première étape de lavage pour éliminer par lavage les particules de poussière ayant une granulométrie supérieure à environ 5 µm et une deuxième étape de lavage pour éliminer par lavage les particules de poussière ayant une granulométrie inférieure à 5 µm.

15. Dispositif selon les revendications 13 à 14, dans lequel la première étape de lavage est une colonne à pulvérisation à co-courant.

16. Dispositif selon les revendications 13 à 15, dans lequel la deuxième étape de lavage est un laveur à Venturi.

17. Dispositif selon les revendications 13 à 16, dans lequel un absorbeur d'ammoniac est relié à l'unité de lavage.

18. Dispositif selon les revendications 13 à 17, dans lequel l'unité d'adsorption comprend un lit fluidisé.
